# EUROPEAN PATENT SPECIFICATION

(11) **EP 1 198 683 B1**
(45) Date of publication and mention of the grant of the patent: **20.10.2004**
(21) Application number: 00951270.8
(22) Date of filing: 04.08.2000
(51) Int. Cl.: F16L 55/10

(54) **A METHOD OF CLOSING A PIPE**
VERFAHREN ZUM SCHLIESSEN EINES ROHRES
PROCEDE D'OBTURATION D'UN TUBE

(30) Priority: 06.08.1999 DK 110399
(43) Date of publication of application: 24.04.2002
(73) Proprietor: TRE-FOR Entreprise A/S, 6000 Kolding (DK)
(72) Inventor: MEHLSEN, Hans, DK-6000 Kolding (DK)
(74) Representative: Siiger, Joergen
(86) International application number: PCT/DK2000/000436
(87) International publication number: WO 2001/011283

(56) References cited:
- GB-A- 2 132 309
- US-A- 5 400 814

## Description

### Technical Field

The invention relates to a method of inserting an inflatable blocking device into a pipe, whereby an installation unit is mounted at the inserting location of said blocking device by a pipe branch of a relatively small diameter initially being welded onto the pipe followed by a mounting of a shut-off valve at the end of said pipe branch.

### Background Art

EP-76,578 discloses a mounting of a positioning unit on a pipe for an insertion of an inflatable blocking device into said pipe. A closing flap ensures that fluid does not leak out of the pipe after the removal of the blocking device. Apparently, the positioning unit cannot be removed after use.

Moreover, US-PS No. 3,805,844 discloses a welding of a pipe branch onto the outer side of a pipe followed by a screwing of a valve down on said pipe branch and an insertion of an inflatable member through said valve. However, the valve cannot be removed after use.

Furthermore, US-PS No. 5,400,814 discloses a method for blocking a pipe, wherein a branch is clamped around the pipe, one hole is drilled in the pipe and an inflatable member supported by a rod is inserted through the hole in the pipe. However, the folding up of the inflatable member could be incorrect.

FR Published Application No. 2610080 discloses a way of placing a transverse pipe branch on a pipe to be blocked. A valve is mounted on the pipe branch, and a first and a second hole are drilled through said valve in the pipe wall, said second hole being drilled diametrically opposite the first hole. Subsequently, an inflatable member supported by a rod is inserted through the first and the second hole, said second hole serving to receive the outermost end of said rod. This known blocking method is encumbered with the draw-back that it is necessary to drill two holes in the pipe.

### Brief Description of the Invention

The object of the invention is to provide a simple method of inserting an inflatable device into a pipe by means of an installation unit, where the major portion of said installation unit can be removed after use, and where said installation unit is far more simple than the hitherto known installation units.

A method of the above type is according to the invention characterised by a hole being drilled in the pipe wall through the shut-off valve and said pipe branch, whereafter a loosely suspended inflatable device with reinforcing means is inserted through said shut-off valve and said hole into the pipe so as to block said pipe, and by said loosely suspended inflatable device after use being removed through the valve, and by a shut-off member in form of a closure plug being inserted also through the valve into the pipe branch, whereafter said valve member can be removed, if desired, said loosely suspended inflatable device with the reinforcing means comprising a rod embedded in a balloon and surrounded by a resilient means. The advantage of inserting the shut-off member into the pipe branch is that the valve member can thereby be removed after use.

Moreover, the pipe branch may according to the invention be prodded with an external thread for the screwing down of the valve member.

Moreover, the pipe branch may according to the invention comprise an internal thread for the screwing down and retaining of the closure plug.

### Brief Description of the Drawings

The invention is explained in greater detail below with reference to the accompanying drawings, in which
Fig. 1 illustrates a pipe with a pipe branch welded thereon,
Fig. 2 illustrates a shut-off valve mounted on the pipe branch,
Fig. 3 illustrates a drilling device mounted on the shut-off valve,
Fig. 4 illustrates how the drilling device is inserted through the shut-off valve and drills a hole in the pipe wall through the pipe branch,
Fig. 5 illustrates how the drilling device is dismounted after the retraction and the closing of the shut-off valve,
Fig. 6 illustrates how a device is subsequently mounted for the insertion of a blocking device,
Fig. 7 illustrates how the blocking device is inserted after an opening of the shut-off valve,
Fig. 8 illustrates the blocking device in the inflated state,
Fig. 9 illustrates the blocking device after deflation,
Fig. 10 illustrates the blocking device after the removal and closing of the shut-off valve,
Fig. 11 illustrates how a device for the insertion of a closure plug in the pipe branch is mounted after the dismounting of the device for the insertion of the blocking device,
Fig. 12 illustrates how the closure plug is inserted after the opening of the shut-off valve,
Fig. 13 illustrates how the shut-off valve and the device for the insertion of the closure member is subsequently removed,
Fig. 14 illustrates how an additional protecting cover is subsequently mounted,
Fig. 15 illustrates how the pipe branch can be welded at an oblique angle relative to the pipe, and
Fig. 16 illustrates a particular embodiment of the balloon blocking device.

### Best Mode for Carrying Out the Invention

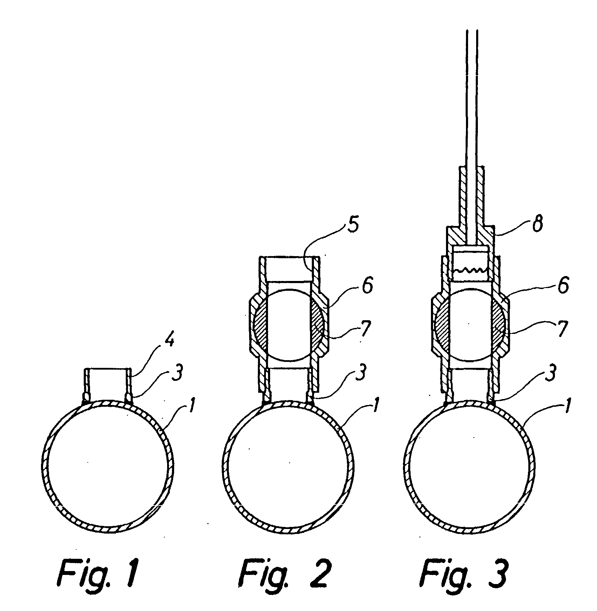

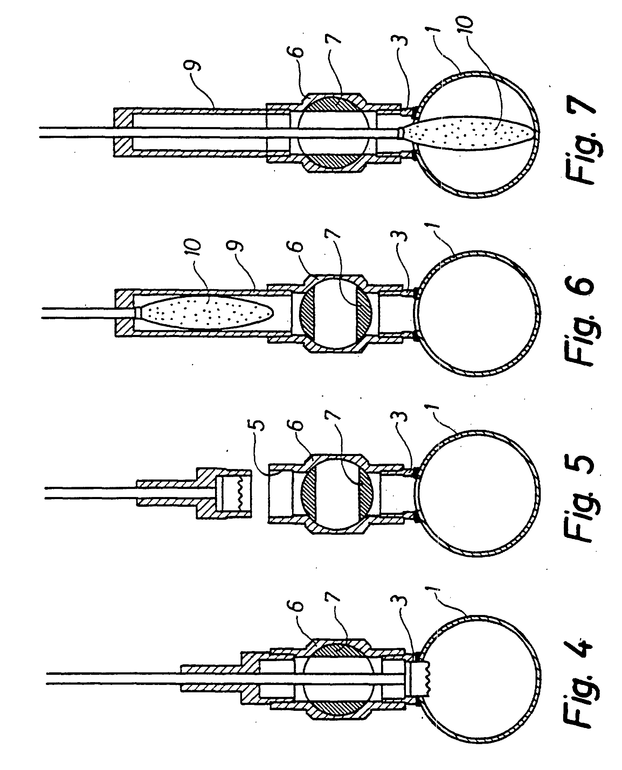

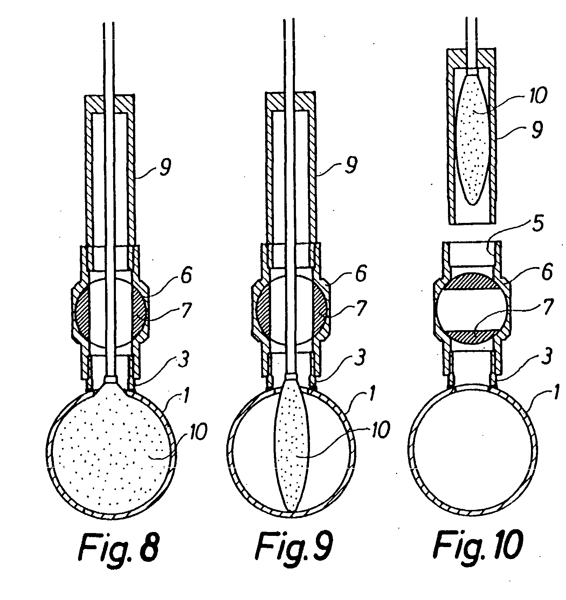

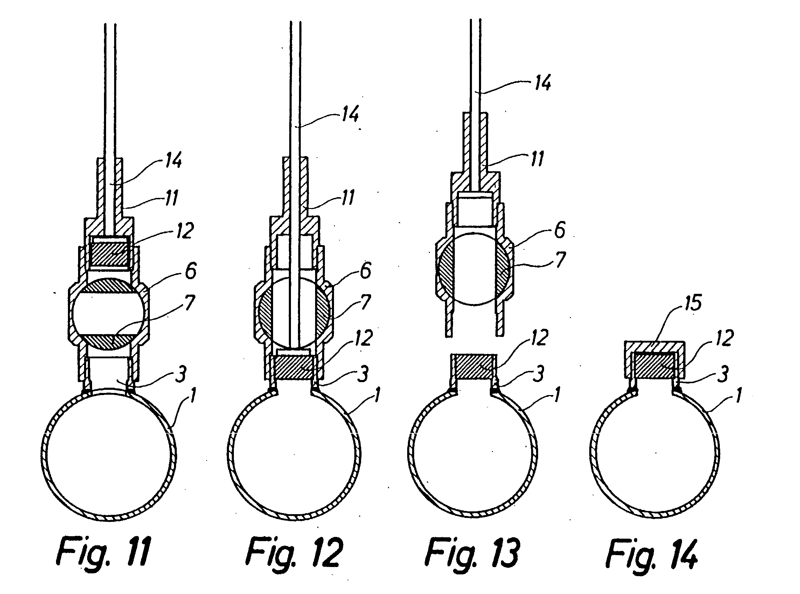

A pipe branch 3 of a relatively small diameter is welded onto the pipe 1 shown in Fig. 1. At the end the pipe branch 3 is provided with an external thread 4. A shut-off valve 6, cf. Fig. 3, can be screwed down on the thread 4, said shut-off valve 6 comprising a rotatable valve member 7 with a circular clearance hole of a diameter substantially corresponding to the internal diameter of the pipe branch 3. The rotatable valve member 7 is handled by means of a projecting handle. At the end the shut-off valve 6 is in turn provided with an inner thread 5 for the screwing down of a bore tap 8, cf. Fig. 3. After the opening of the shut-off valve 7, the bore tap 8 can drill a hole in the pipe wall 1 through said shut-off valve 7, cf. Fig. 4. When the hole in the pipe wall 1 has been drilled and the bore tap 8 has been removed through the valve 7, said valve is shut off and the bore tap 8 can be dismounted without fluid flowing out of the pipe 1. Subsequently, a device 9 for inserting an inflatable blocking device 10 can be screwed down at the end of the shut-off valve 6. When the shut-off valve 6 has been opened again, the reinforced inflatable device 10 can be inserted in the pipe 1 and be inflated by means of a pressurized fluid source associated therewith in such a manner that the passage through the pipe 1 has been shut off, cf. Fig. 8. After use of the inflatable device 10, the pressure is removed therefrom, cf. Fig. 9. Subsequently, the inflatable blocking device 10 can be removed and the shut-off valve 6 be shut off, and the device 9 can be removed, cf. Fig. 10. Then a device 11 can be screwed down at the end of the shut-off valve 6 for the insertion of a closure plug 12 into the pipe branch 3. This device 11 comprises a rotatable bar 14, and the closure plug 12 is loosely secured at the end of said bar 14. The closure plug 12 is of a diameter substantially corresponding to the internal diameter of the pipe branch 3. The closure plug 12 is made of a solid material with teflon tape and is secured to the bar 14 by means of a particular gripping member ensuring a non-rotatable connection between the bar 14 and the plug 12. When this device 11 has been mounted and the shut-off valve 6 been opened, the closure plug 12 can be screwed down into the internal thread of the pipe branch 3 by means of the rotatable bar 14. When the closure plug 12 has been secured, the gripping member and the rotatable bar 14 can be removed from the closure plug 12 whereafter the shut-off valve 6 and the device 11 can be dismounted, optionally in one step, cf. Fig. 13. Subsequently, it is possible to screw a cover 15 down on the pipe branch 3, said cover serving as an additional safety device.

Seals in form of O-rings can advantageously be used in connection with the various interconnections by means of threads.

The interconnections can also be provided by means of couplings, such as bayonet clutches or the like devices.

A particular advantage of the method according to the invention is that the valve can be removed after use and optionally reused elsewhere.

When it is desired to block the pipe again, the procedure need only be reversed, i.e. followed in reverse order.

The blocking method according to the invention facilitates an interference with and service on an existing pipe system without necessitating a previous emptying thereof.

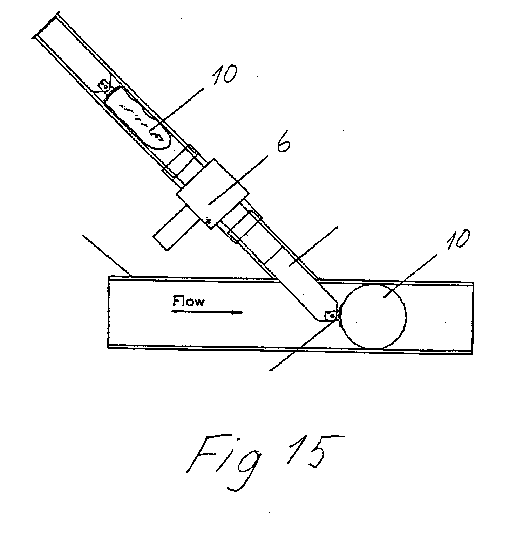

According to an alternative embodiment, the pipe branch is welded at an oblique angle relative to the pipe, cf. Fig. 15, and then the inflatable balloon 10 is obliquely inserted relative to the pipe. As a result, the balloon 10 does not come into contact with possible inner burrs at the interconnecting location of the pipe branch and the pipe.

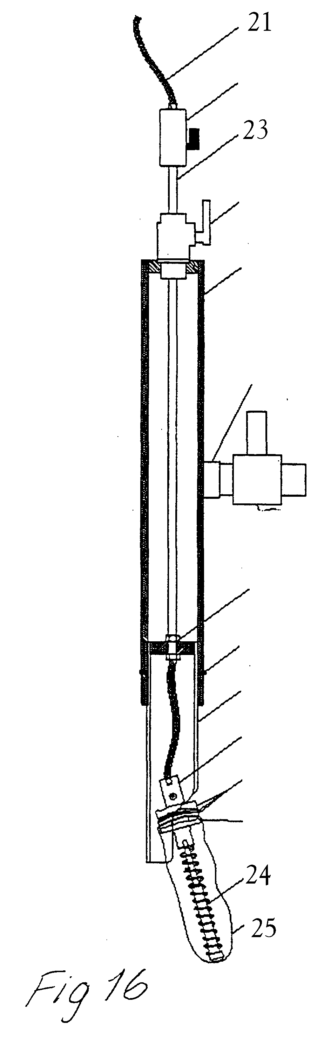

According to a particularly advantageous embodiment, the balloon blocking mechanism can be shaped as shown in Fig. 16, wherein 21 is a gas-conducting hose communicating with a gas-conducting pipe 23 for the supply of high-pressure gas or pressurized fluid to a balloon 25 made of Kevlar-reinforced latex. The balloon 25 houses a spring system 24 for distending the balloon in the longitudinal direction and ensuring a correct folding up of the balloon 25.

## Claims

1. A method of inserting an inflatable blocking device (10) into a pipe (1), whereby a pipe branch (3) is initially welded at the inserting location of the blocking device (10), said pipe branch being of a relatively small diameter, and followed by a mounting at the end of said pipe branch (3) of a shut-off valve (6), wherein one hole being drilled in the pipe wall (1) through said shut-off valve (6) and said pipe branch (3), whereafter a loosely suspended inflatable device (10) with reinforcing means is inserted through said shut-off valve (6) and said hole into the pipe (1) so as to block said pipe, and wherein the loosely suspended inflatable device (10) after use being removed through the valve (6), a shut-off member in form of a closure plug (12) being inserted also through the valve (6) into the pipe branch (3), where-after said valve member (6) can be removed, if desired, and wherein said loosely suspended inflatable device with the reinforcing means comprising a rod embedded in a balloon and surrounded by a resilient means.

2. A method as claimed in claim 1, **characterised in that** the resilient means is embedded in the inflatable device.

3. A method as claimed in claim 1 or 2, **characterised in that** the balloon is made of Kevlar optionally admixed latex.

4. A method as claimed in one or more of the preceding claims, **charised** in that the pipe branch (3) is obliquely welded relative to the pipe (1), such as at an angle of approximately 45° relative thereto.

5. A method as claimed in one or more of the preceding claims, **characterised in that** the pipe branch (3) is provided with an external thread (4) for the screwing down of a valve member (6).

6. A method as claimed in one or more of the preceding claims, **characterised in that** the pipe branch (3) further comprises an internal thread for the screwing down and retaining of the closure plug (12).

## Patentansprüche

1. Ein Verfahren zum Einsetzen einer aufblasbaren Sperrvorrichtung (10) in ein Rohr (1), bei welchem zunächst an der Einsetzstetle der Sperrvorrichtung (10) ein Rohrabzweigstück (3) angeschweißt wird, wobei das besagte Rohrabzweigstück einen relativ kleinen Durchmesser aufweist, worauf am Ende des besagten Rohrabzweigstücks (3) ein Absperrhahn (6) montiert wird und durch den besagten Absperrhahn (6) und das besagte Rohrabzweigstück (3) hindurch ein Loch in die Rohrwand (1) gebohrt wird, wonach eine locker aufgehängte, aufblasbare Vorrichtung (10) mit verstärkenden Mitteln durch den besagten Absperrhahn (6) und das besagte Loch in das Rohr (1) derart eingesetzt wird, dass das besagte Rohr abgesperrt wird, und bei dem die locker aufgehängte, aufblasbare Vorrichtung (10) nach dem Gebrauch durch den Hahn (6) hindurch entfernt wird und ein Absperrglied in Form eines Verschluss-Stopfens (12) ebenfalls durch den Hahn (6) hindurch in das Rohrabzweigstück (3) eingesetzt wird, wonach das besagte Hahnelement, falls gewünscht, entfernt werden kann, und bei dem die besagte locker aufgehängte, aufblasbare Vorrichtung mit den verstärkenden Mitteln eine in einen Ballon eingebettete Stange umfasst, die von einem elastischen Mittel umgeben ist.

2. Ein Verfahren, wie in Anspruch 1 beansprucht, **dadurch gekennzeichnet, dass** das elastische Mittel in die aufblasbare Vorrichtung eingebettet ist.

3. Ein Verfahren, wie in Anspruch 1 oder 2 beansprucht, **dadurch gekennzeichnet, dass** der Ballon aus Kevlar besteht, dem wahlweise Latex beigemischt ist.

4. Ein Verfahren, wie in einem oder mehreren der vorangehenden Ansprüche beansprucht, **dadurch gekennzeichnet, dass** das Rohrabzweigstück (3) schräg an das Rohr (1) angeschweißt ist, beispielsweise unter einem Winkel von ungefähr 45° zum Rohr.

5. Ein Verfahren, wie in einem oder mehreren der vorangehenden Ansprüche beansprucht, **dadurch gekennzeichnet, dass** das Rohrabzweigstück (3) mit einem Außengewinde (4) zum Anschrauben eines Hahnelements (6) versehen ist.

6. Ein Verfahren, wie in einem oder mehreren der vorangehenden Ansprüche beansprucht, **dadurch gekennzeichnet, dass** das Rohrabzweigstück (3) weiterhin ein Innengewinde zum Einschrauben und festhalten des Verschtuss-Stopfens (12) aufweist.

## Revendications

1. Procédé d'insertion d'un dispositif de blocage gonflable (10) dans un conduit (1), au moyen duquel une branche du conduit (3) est initialement soudée à l'emplacement d'insertion du dispositif de blocage (10), ladite branche de conduit présentant un diamètre relativement petit, et suivie par un montage à l'extrémité de la branche du conduit (3) d'une vanne de coupure (6), dans lequel un trou est percé dans la paroi du conduit (1) à travers ladite vanne de coupure (6) et ladite branche du conduit (3), après quoi un dispositif gonflable suspendu de façon lâche (10) avec des moyens de renforcement est inséré à travers ladite vanne de coupure (6) et ledit trou dans le conduit (1) de façon à bloquer ledit conduit, et dans lequel ledit dispositif gonflable suspendu de façon lâche (10) est enlevé après utilisation à travers la vanne (6), un élément d'obturation sous la forme d'un bouchon de fermeture (12) étant également inséré à travers la vanne (6) dans la branche du conduit (3), après quoi ledit élément de vanne (6) peut être enlevé si on le souhaite, et dans lequel ledit dispositif gonflable suspendu de façon lâche avec les moyens de renforcement comprend une tige incorporée dans un ballon et entourée par un moyen élastique.

2. Procédé selon la revendication 1, **caractérisé en ce que** le moyen élastique est incorporé dans le dispositif gonflable.

3. Procédé selon la revendication 1 ou 2, **caractérisé en ce que** le ballon est réalisé en Kevlar optionnellement mélangé à du latex.

4. Procédé selon une ou plusieurs des revendications précédentes, **caractérisé en ce que** la branche du conduit (3) est soudée à l'oblique par rapport au conduit (1), comme par exemple à un angle d'approximativement 45° par rapport à celui-ci.

5. Procédé selon une ou plusieurs des revendications précédentes, **caractérisé en ce que** la branche du conduit (3) est munie d'une vis externe (4) pour visser un élément de vanne (6).

6. Procédé selon une ou plusieurs des revendications précédentes, **caractérisé en ce que** la branche du conduit (3) comprend en outre une vis interne pour visser et retenir le bouchon de fermeture (12).
